# EUROPEAN PATENT SPECIFICATION

(11) **EP 3 922 407 B1**
(45) Date of publication and mention of the grant of the patent: **26.04.2023**
(21) Application number: 21178132.3
(22) Date of filing: 08.06.2021
(51) Int. Cl.: B24B 5/38, B23B 5/08

(54) **MACHINE FOR DIAMOND-FINISHING ELONGATED BODIES**
MASCHINE ZUR ENDBEARBEITUNG MIT EINEM DIAMANTEN VON LÄNGLICHEN KÖRPERN
MACHINE POUR LE DIAMANTAGE DE CORPS ALLONGÉS

(30) Priority: 08.06.2020 IT 202000013522
(43) Date of publication of application: 15.12.2021
(73) Proprietor: Pettenuzzo, Gianni, 38122 Trento (TN) (IT)
(72) Inventor: Pettenuzzo, Gianni, 38122 Trento (TN) (IT)
(74) Representative: Caldon, Giuliano

(56) References cited:
- EP-A1- 2 047 930
- DE-A1- 4 041 539

## Description

### Field of application

The present invention regards a machine for diamond-finishing elongated bodies, according to the preamble of the independent claim 1.

The present machine is inserted in the industrial field of mechanical machining attained by means of cold plastic deformation and incision of metallic bodies for jewelry making.

In particular, the machine, object of the invention, is advantageously intended to be employed for making diamond-finishing machining on elongated bodies of different sizes, shapes and varieties, such wires, tubes, half-round chains, etc.

### State of the art

Diamond-finishing is an operation of surface finishing of metallic elements widely employed in jewelry. In particular, the diamond-finishing provides for removing, by means of tools with a diamond tip, metal flakes from the external surface of an element to be machined, so as to shape its external surface, attaining a plurality of facets that produce light effects that are particularly appreciated by the final users.

For the purpose of attaining such diamond-finishing machining, machines are presently known for diamond-finishing articles of various shapes and sizes, such as for example plates, rings, bracelets or elongated bodies such as wires, tubes, half-round chains, etc. In particular, the machines for diamond-finishing elongated bodies of known type are generally provided with at least one driving group, adapted to move the elongated body to slide along an operating path, and with at least one operating group carrying, mounted thereon, a diamond-finishing milling cutter activatable to operate on the elongated body at a work region, identified along the operating path.

In addition, the machines for diamond-finishing elongated bodies of known type are generally provided with means for moving the diamond-finishing milling cutter, adapted to move it around the external surface of the elongated body to be diamond-finished, so as to execute the diamond-finishing operation over the entire external surface thereof.

The machines for diamond-finishing elongated bodies of the type briefly described above have in practice shown that they do not lack drawbacks.

The main drawback of these machines of known type lies in the fact that they do not allow, at least in a facilitated manner, machining elongated bodies of different sizes, in particular in the case of cylindrical elongated bodies provided with different diameters.

More in detail, in order to machine cylindrical elongated bodies, diamond-finishing milling cutters are known which are provided with a milling head provided with a work surface suitably shaped with an arc of circumference and in particular counter-shaped with respect to the external surface of the specific cylindrical elongated body to be diamond-finished. Therefore, in order to diamond-finish cylindrical elongated bodies provided with different diameters it is necessary to substitute the milling head of the diamond-finishing milling cutter each time.

It is easy to perceive that such continuous substitutions are inconvenient for the operator who uses the machines of known type, since these involve a considerable loss of time and also require providing numerous milling heads, one for each diameter that the machine can be intended to machine.

A further drawback of the machines for diamond-finishing elongated bodies of known type lies in the fact that the movements of the driving group and of the diamond-finishing milling cutter are driven by mechanical actuation members, in particular with cam drive, and therefore, in order to diamond-finish elongated bodies of different size, it is necessary to re-equip the machine each time, changing the settings of its actuation members as a function of the diameter of the elongated bodies to be diamond-finished. The document DE 4041539 A1, forming the basis for the preamble of claim 1, describes a device of known type for the surface machining of elongated bodies, such as rods or tubes. Such device comprises a rotary head on which multiple milling cutters are peripherally mounted, adapted to act on the surface of the elongated body to be machined. In particular, the rotary head is provided, centrally, with a guide sleeve, which is crossed by the elongated body and has an internal diameter flush with the diameter of the elongated body itself, so as to correctly maintain the latter in position during the advancing thereof. Also this solution of known type does not allow operating easily on elongated bodies of different sizes, since in particular it requires a guide sleeve having the same diameter as the elongated body to be machined.

### Presentation of the invention

In this situation the problem underlying the present invention is therefore that of overcoming the drawbacks manifested by the abovementioned solutions of known type by providing a machine for diamond-finishing elongated bodies, which allows operating in a simple and inexpensive manner on elongated bodies of different shapes and sizes. A further object of the present invention is to provide a machine for diamond-finishing elongated bodies which allows operating on elongated bodies of different shapes and sizes without having to each time substitute the diamond-finishing milling cutter.

A further object of the present invention is to provide a machine for diamond-finishing elongated bodies which allows operating on elongated bodies of different shapes and sizes without having to each time change the settings of its actuation members.

A further object of the present invention is to provide a machine for diamond-finishing elongated bodies which is capable of obtaining a high quality of the diamond-finished elongated bodies.

### Brief description of the drawings

The technical characteristics of the present invention, according to the aforesaid objects, can be seen from the content of the below-reported claims and the advantages thereof will be more evident from the following detailed description, made with reference to the enclosed figures, which represent a merely exemplifying and non-limiting embodiment of the invention in which:
- figure 1 shows a perspective view of a preferred embodiment of the machine for diamond-finishing elongated bodies, object of the present invention;
- figure 2 shows a further perspective view of the machine for diamond-finishing elongated bodies of figure 1, in which several parts have been removed in order to better illustrate other parts;
- figure 3 shows a front view of the machine for diamond-finishing elongated bodies of figure 2;
- figure 4 shows a perspective view of a detail of the machine for diamond-finishing elongated bodies, object of the present invention, in which one can better appreciate an operating group of the present machine;
- figure 5 shows a first front view of a detail of the machine for diamond-finishing elongated bodies, object of the present invention, in which one can better appreciate a driving group of the present machine;
- figure 6 shows a second front view of a detail of the machine for diamond-finishing elongated bodies, object of the present invention, in which one can better appreciate the driving group of the present machine from a different angle.

### Detailed description of several preferred embodiments

With reference to the enclosed drawings, reference number 1 overall indicates a machine for diamond-finishing elongated bodies in accordance with the present invention.

This is generally intended to be employed in order to attain diamond-finishing machining on elongated bodies 100 of different sizes, shapes and varieties, such as for example wires, tubes, half-round chains, etc. In particular, the present machine 1 is intended to execute diamond-finishing machining on the external surface of the elongated body 100.

Preferably, the elongated body 100 is provided with at least one external covering layer made of metallic material and intended to be subjected to diamond-finishing machining, or the elongated body 100 is entirely made of metallic material. In particular, such metallic material is preferably a precious metal intended to be employed in jewelry, such as for example gold, silver or other.

The present machine 1 comprises a support body 2 and at least one driving group 3, mechanically supported by the support body 2 itself.

The driving group 3 of the present machine 1 is adapted to move the elongated body 100 to be diamond-finished along a movement path Y preferably coinciding with the main extension axis of the elongated body 100 itself, as is illustrated in the enclosed figures.

According to the invention, the machine 1 also comprises at least one operating group 4, it too mechanically supported by the support body 2 and placed to intercept the movement path Y. In particular, the operating group 4 defines a work region along the operating path Y, at which the operating group 4 is adapted to operate on the elongated body 100, as is better described hereinbelow.

The operating group 4 is also provided with at least one diamond-finishing milling cutter 5 adapted to operate on the elongated body 100, preferably at the aforesaid work region.

With reference to the particular example illustrated in the enclosed figures, the machine 1 comprises, in addition to the operating group 4, other machining groups which can be of type different from the operating group 4 in order to execute different types of machining (for example of known type). Of course, the machine 1, object of the present invention, might not have the particular configuration of the groups illustrated in the depicted example, since it can comprise different types of machining groups, or also be of mono-head type (i.e. only provided with the operating group 4), without departing from the protective scope of the present invention.

In accordance with the idea underlying the present invention, the operating group 4 comprises a support body 6, mechanically connected to the support body 2, and a rotatable support 7 rotatably connected to the support body 6 itself around a first rotation axis R1.

The rotatable support 7 is also provided with a through hole 71, which is crossed by the movement path Y of the elongated body 100 and has an axis X substantially parallel to the first rotation axis R1 and preferably substantially coinciding with such first rotation axis R1. In other words, therefore, the rotatable support 7 is mounted rotatable around the axis X of its through hole 71.

The diamond-finishing milling cutter 5 is mounted on the rotatable support 7 and projects inside the through hole 71 towards the axis X. In this manner, the work region of the movement path Y is advantageously defined as the region of the movement path Y placed to cross the through hole 71 of the rotatable support 7, on which the diamond-finishing milling cutter 5 is susceptible of acting.

In addition, the operating group 4 of the present machine 1 comprises first motor means 8 mechanically connected to the rotatable support 7 and arranged for rotating it around the first rotation axis R1.

In particular, the rotation of the rotatable support 7 involves a corresponding rotation also of the diamond-finishing milling cutter 5 mounted on the rotatable support 7 itself therefore, the first motor means 8 are also adapted to rotate the diamond-finishing milling cutter 5 around the rotation axis R1.

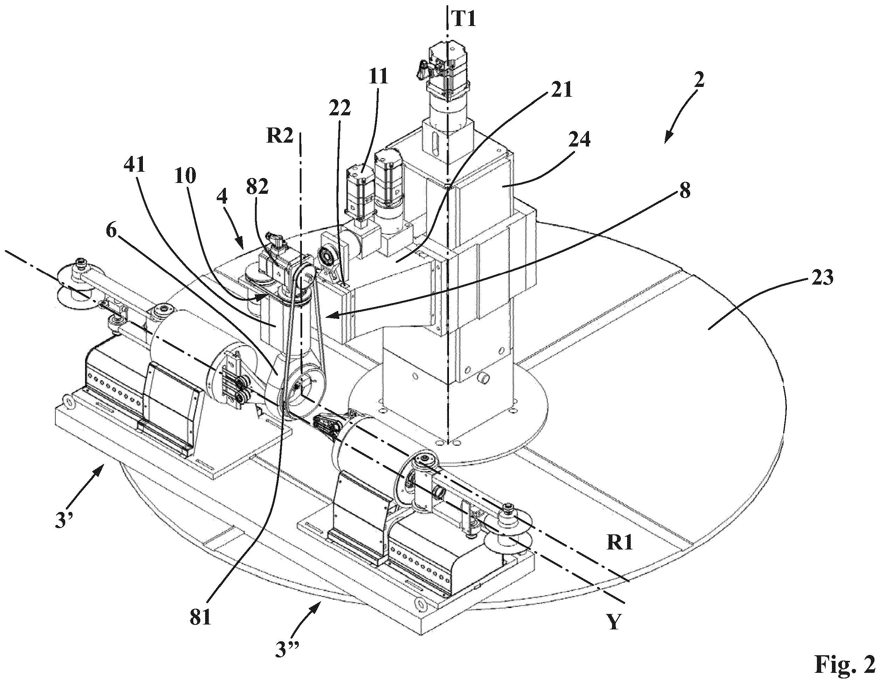

Preferably, with reference to figure 2, the aforesaid first motor means 8 comprise at least one first motor 82, preferably electric, in particular of brushless type, and a first transmission belt 81 mounted as a ring around the rotatable support 7 and around a pulley fixed to the drive shaft of the first motor 82.

In accordance with the preferred embodiment illustrated in the enclosed figures, the support body 6 is provided with a housing opening extended in a through manner parallel to the axis X of the through hole 71 of the rotatable support 7 and in which the rotatable support 7 itself is rotatably mounted.

In particular, the rotatable support 7 has substantially annular shape and is constrained within the housing opening of the support body 6 by means of rolling sliding means (e.g. rolling bearings), in a manner such that, when it is actuated by the first motor means 8, it rotates within the housing opening of the support body 6.

More in detail, the rotatable support 7 is provided with an annular external surface with cylindrical shape susceptible of rotating within the housing opening of the support body 6. Advantageously, moreover, the annular external surface of the rotatable support 7 is counter-shaped with respect to the housing opening of the support body 6 in order to be housed substantially to size at its interior.

In particular, the rotatable support 7 is provided with an annular lip extended outside the housing opening of the support body 6 and whose external surface is engaged with the transmission belt 81 in order to transmit to the support body 6 the motion generated by the first motor 82.

The rotatable support 7 is according to the invention provided with an internal annular surface which is extended around the axis X perimetrically delimiting the through hole 71. In accordance with the preferred embodiment illustrated in the enclosed figures, the internal annular surface of the rotatable support 7 has circular shape (nevertheless it can also take on different shapes, as long as they are compatible with the operation of the present machine, such as hexagonal, octagonal, etc.).

The diamond-finishing milling cutter 5 is mounted on the internal annular surface of the rotatable support 7 and is projectingly extended from the latter within the through hole 71.

More in detail, the diamond-finishing milling cutter 5 comprises at least one milling head 51 adapted to act on the surface of the elongated body 100 in order to execute the diamond-finishing machining. In accordance with the embodiment illustrated in the enclosed figures, the milling head 51 is mounted on the rotatable support 7 and is extended, in particular from the internal annular surface of the latter, within the through hole 71 along a first extension direction Z1 that is radial with respect to the axis X of the through hole 71 itself.

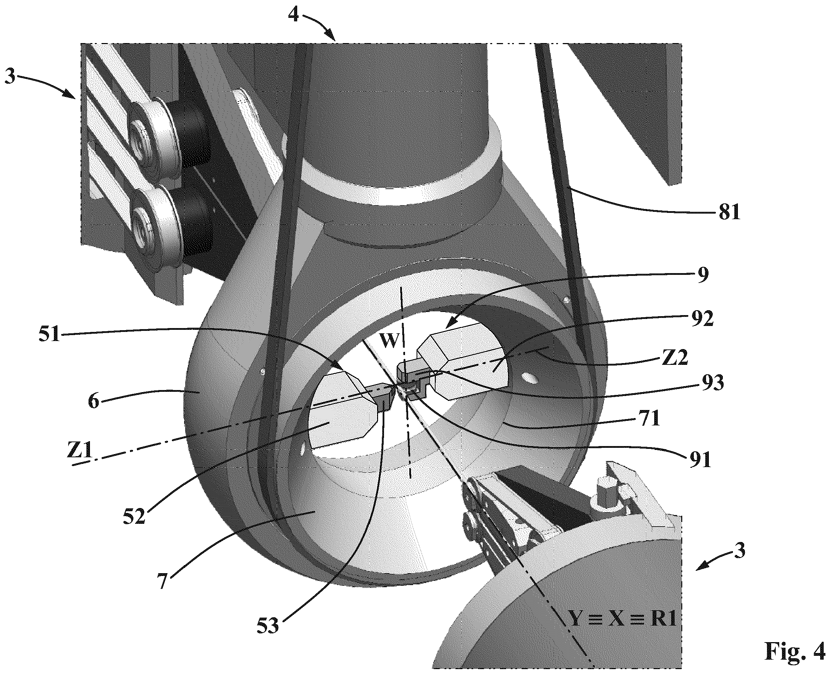

More in detail, with reference to the example of figure 4, the milling head 51 comprises a first base body 52, also known in the technical jargon of the field "tool-holder", which is supported (preferably in a rigid manner) by the rotatable support 7 and carries, rotatably mounted thereon, a rotary tool 53 adapted to rotate around an operating axis in order to execute the diamond-finishing machining operations. In particular, the operating axis of the rotary tool 53 is preferably placed radially with respect to the first rotation axis R1 and still more preferably substantially coincides with the first extension direction Z1 of the milling head 51.

Advantageously, the rotary tool 53 comprises a tool-holder mandrel mounted in a rotatable manner in the base body 52, and a work tip fixed to the tool-holder mandrel and extended, at least with one end thereof, outside the tool-holder mandrel in order to act on the elongated body 100 to be machined.

The milling head 51 also comprises a motor member (not illustrated in the enclosed figures) mechanically connected to the rotary tool 53 (in particular to the tool-holder mandrel) and arranged for actuating the latter to rotate around its operating axis. In particular, the motor member is adapted to rotate the rotary tool 53 of the milling head 51 with a rotation speed comprised between 1000 and 2000 revolutions/minute and preferably comprised between 1400 and 1600 revolutions per minute and more preferably equal to about 1450 revolutions per minute.

Advantageously, moreover, the milling head 51 is provided with a first adjustment guide (parallel to the operating axis of the rotary tool 53 and in particular to the first extension direction Z1) along which at least part of the rotary tool 53 is movable, and first fixing means arranged for fixing the latter along the first adjustment guide itself in different first operating positions, in which the rotary tool 53 has corresponding different distances from the axis X of the through hole 71. For example, the aforesaid first adjustment guide is arranged in the tool-holder mandrel of the rotary tool 53 and carries the work tip mounted thereon, in an adjustable manner. The latter is fixable, in the different first operating positions, by means of the aforesaid fixing means comprising for example retention pins or screws.

Advantageously, therefore, by selecting the suitable operating position in which the rotary tool 53 is arranged, the machine 1 is capable of acting on elongated bodies 100 of different sizes, and more in detail is capable of acting on elongated bodies 100 provided with external surfaces with different diameters.

In particular, with the expression "diameter" in the aforesaid document, reference is made to the hydraulic diameter of a cross section of the elongated body 100 itself, which can have circular or other shape. Therefore, in the present document, the term "diameter" is not exclusively referred to a cylindrical shape of the elongated body 100, but rather it can be referred to any one shape of such elongated body 100.

In accordance with the preferred embodiment illustrated in the enclosed figures, the operating group 4 comprises an abutment element 9, which is mounted on the rotatable support 7, in a position diametrically opposite the milling head 51 with respect to the axis X of the through hole 71, and is adapted to receive the elongated body 100 in abutment.

In particular, the abutment element 9 is extended within the through hole 71, preferably radially with respect to the axis X and still more preferably along the first extension direction Z1 of the milling head 51, projectingly extended from the internal annular surface of the rotatable support 7.

In accordance with the example of figure 4, the abutment element 9 advantageously comprises an abutment wheel 91, which is idly rotatable around a revolution axis W orthogonal to the axis X of the through hole 71 and also orthogonal to the first extension direction Z1 of the milling head 51. In particular, the abutment wheel 91 is provided with an annular external face placed around its revolution axis W and susceptible of receiving the elongated body 100 in abutment. Advantageously, moreover, the aforesaid annular external face of the abutment wheel 91 is provided with at least one annular concavity, preferably with arc of circumference section and still more preferably semicircumference section, in order to receive the cylindrical elongated body 100 in abutment.

In accordance with the preferred embodiment illustrated in the enclosed figure 4, the abutment element 9 comprises a second base body 92, mounted (preferably in a rigid manner) on the rotatable support 7 and extended projectingly from its internal annular surface towards the axis X of the through hole 71, in particular according to a second extension direction Z2 that is radial with respect to the axis X itself, and still more preferably along the first extension direction Z 1 of the milling head 51.

Preferably, the abutment element 9 also comprises a support arm 93 mounted on the second base body 92 and provided with a free end on which the abutment wheel 91 is mounted. Advantageously, the second base body 92 is provided with a second adjustment guide substantially parallel to the second extension direction Z2 and with which the support arm 93 is adjustably constrained with the abutment wheel 91 projecting beyond the second base body 92 towards the axis X of the through hole 71. Preferably, the abutment element 9 is provided with second fixing means, such as for example a screw or a pin, which are arranged for fixing the support arm 93 to the second base body 92, along the second adjustment guide, in different second operating positions, in which the abutment wheel 91 has corresponding different distances from the axis X of the through hole 71.

Advantageously, the aforesaid adjustment of the position of the abutment wheel 91 allows greater versatility of the machine 1, which is capable of operating on elongated bodies 100 provided with external surfaces with different diameters.

In accordance with the preferred embodiment, illustrated in the enclosed figures, the operating group 4 comprises a support arm 41 connected to the support body 2 and on which the support body 6 is rotatably mounted. In particular, the support body 6 is mounted in a manner such to be able to revolve around a second rotation axis R2 orthogonal to the first rotation axis R1, and preferably orthogonal also to the movement path Y of the elongated body 100.

The operating group 4 advantageously comprises second motor means 10 mechanically connected to the support body 6 and arranged for rotating the support body 6 itself around the second rotation axis R2.

Preferably, the aforesaid second motor means 10 are arranged for making the support body 6 complete a partial rotation around the second rotation axis R2, equal to an arc of circumference comprised between 20° and 60° and preferably about 40°.

Advantageously, such rotation of the support body 6 allows rotating around the second rotation axis R2 also the rotatable support 7 and the milling head 51 mounted thereon. In particular, the aforesaid rotation of the support body 6 allows moving the first extension direction Z 1 of the milling head 51 with respect to the movement path Y so as to change the angle of the milling head 51 with respect to the elongated body 100 to be diamond-finished.

More in detail, in the example of figure 4 the milling head 51 is illustrated placed with the first extension direction Z1 in a position perpendicular to the movement direction Y of the elongated body 100. Advantageously, the second motor means 10 are adapted to move the first extension direction Z1 between a position tilted +20° and a position tilted -20° with respect to the aforesaid position perpendicular to the movement direction Y. In particular, with +20° it is intended an angle oriented 20° measured starting from the position perpendicular in counter-clockwise sense, and with -20° it is intended an angle oriented 20° measured starting from the position perpendicular in clockwise sense.

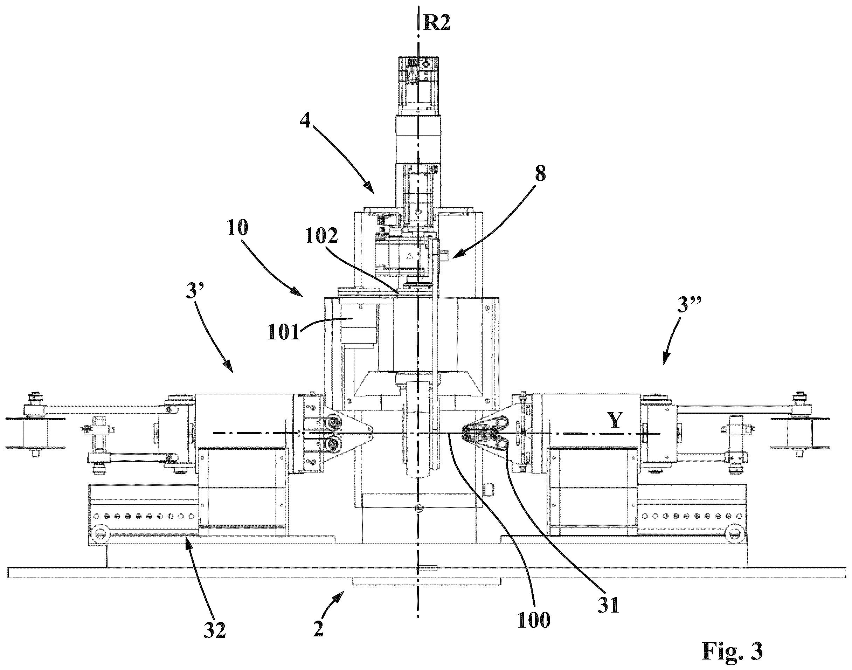

In particular, the second motor means 10 advantageously comprise a second motor 101, preferably electric, in particular of brushless type, mounted on the support arm 41, and a second transmission belt 102 mounted as a ring around a pulley made on the support body 6 and around a further pulley fixed to the drive shaft of the second motor 101, as is illustrated in the enclosed figure 3.

With reference to the example illustrated in figure 2, the support body 6 comprises a support shaft which is inserted in a rotatable manner (for example by means of rolling bearings) within a hinging seat made in the support arm 41 and is extended between a lower end and an upper end, which project respectively below and above the hinging seat. In particular, the lower end of the rotatable shaft carries, fixed thereto, a widened portion in which the housing opening is obtained, in which the rotatable support 6 is mounted. Preferably, on the lower end of the rotatable shaft, the first motor 82 is mounted which is adapted to actuate the rotation of the rotatable support 6.

In accordance with the preferred embodiment illustrated in the enclosed figures, the support body 2 comprises a support frame 21 provided with a guide 22 extended according to a translation direction T1 orthogonal to the first rotation axis R1 of the rotatable support 6 (and preferably substantially vertical), the support arm 41 of the operating group 4 being slidably connected to such guide 22.

More in detail, in accordance with the preferred embodiment illustrated in figure 2, the support body 2 preferably comprises a substantially flat, preferably horizontal support base 23, on which the driving group 3 is advantageously mounted.

Advantageously, the support body 2 also comprises an elevation column 24, which rises preferably vertically starting from the support base 23, and on which the support frame 21 is advantageously mounted.

Preferably, moreover, the support frame 21, mounted on the elevation column 23, carries, mounted thereon, the support arm 41 of the operating group 4 at a height (with respect to the support base 23) greater than the height at which the driving group 3 is placed.

Advantageously, moreover, the aforesaid translation direction T1 of the guide 22 is extended substantially parallel to the elevation column 24 and preferably substantially vertically so as to be able to vary the height, with respect to the support base 23, at which the support arm 41 of the operating group 4 is placed.

In order to vary such height, the operating group 4 advantageously comprises third motor means 11 mechanically connected to the support arm 41 and arranged to move the support arm 41 itself along the translation direction T1.

In particular, the third motor means 11 comprise one or more third motors, preferably electric, in particular of brushless type, advantageously mounted on the support frame 21 and acting on the support arm 41 in order to move it along the guide 22. Advantageously, the third motor means 11 are arranged for moving the support arm 41 between an aligned position (illustrated in figures 3 and 4), in which the rotatable support 7 is placed with its first rotation axis R1 which lies on the same lying plane of the movement path Y of the elongated body 100 and preferably coincides with the latter; and one or more non-aligned positions (of which a non-aligned position is illustrated in figure 2), in which the rotatable support 7 is placed with its first rotation axis R1 spaced with respect to the movement path Y (at corresponding distances) and preferably which lies on a plane parallel to the lying plane of the movement path Y itself.

More in detail, with the support arm 41 placed in the aligned position, the diamond-finishing milling cutter 5 is susceptible of being rotated around the movement path Y of the elongated body 100 and therefore, during its rotation is susceptible of coming into contact with the entire external perimeter of the elongated body 100 itself, so as to execute diamond-finishing machining on the entire external surface of the elongated body 100.

Otherwise, with the support arm 41 placed in one of the aforesaid non-aligned positions, the diamond-finishing milling cutter 5 is susceptible of being rotated in a non-aligned manner with respect to the movement path Y and thus, during its rotation it is susceptible of coming into contact only with one portion of the external perimeter of the elongated body 100, so as to execute the diamond-finishing machining only on one portion of the external surface of the elongated body 100.

In the latter case, it is possible to execute particular machining operations of the elongated body 100 which cannot be attained with the machines for diamond-finishing elongated bodies of known type. For example, it is possible to execute diamond-finishing machining on an elongated body 100 with rectangular section in order to attain a "lens-like" final effect. In particular, in order to execute such machining, the support arm 41 is placed in one of the aforesaid non-aligned positions and the elongated body 100 is then placed with a first external face thereof more distant from the milling head 51 with respect to the other three faces thereof. In such configuration, therefore, the milling head is susceptible of machining only on the three faces of the elongated body 100 with which it comes into contact, and does execute any machining on the first. Hence, in operation, the revolving milling head machines the aforesaid three faces of the elongated body 100, rounding the edges thereof, and it does not work on the first face, which hence remains flat and smooth. The final result is thus an elongated body 100 with a "lens-like" (or D-shaped) section, i.e. provided with a flat face (corresponding to the aforesaid first face of the rectangular starting elongated body 100) and with a rounded face (corresponding to the remaining three faces of the rectangular starting elongated body 100).

Advantageously, the machine 1 comprises a logic control unit (not illustrated in the enclosed figures), which is operatively connected to the first motor means 8 of the operating group 4 and is adapted to actuate them in an automated manner in order to rotate the rotatable support 7 around the first rotation axis R1. In particular, the logic control unit is programmable for driving different actuation speeds of the first motor means 8, in order to rotate the rotatable support 7 with different corresponding rotation speed based on the program selected by a user.

Advantageously, the logic control unit is operatively connected to the motor member of the milling head 51 in order to rotate the rotary tool 53 to execute the diamond-finishing machining. Preferably, moreover, such actuation of the motor member is synchronized with the actuation of the first motor means 8, so as to rotate the rotary tool 53 with the rotatable support 7 which rotates around the first rotation axis R1.

Preferably, the logic control unit is operatively connected to the second motor means 10 of the operating group 4 and is adapted to actuate them in an automated manner in order to rotate the support body 6 around the second rotation axis R2 so as to execute the diamond-finishing machining of the elongated body 100 in a tilted manner with respect to the movement direction Y. Advantageously, such actuation of the second motor means 10 can be synchronized with the actuation of the first motor means 8. Advantageously, the logic control unit is operatively connected to the third motor means 11 of the operating group 4 and is adapted to actuate them in an automated manner in order to move the support frame 20 along the guide 22, so as to position the support arm in the aligned position or in one of the non-aligned positions in order to execute the diamond-finishing machining, respectively along the entire external surface of the elongated body 100 or along only one portion of its external surface. Advantageously, such actuation of the third motor means 11 can be synchronized with the actuation of the first motor means 8.

Advantageously, moreover, the logic control unit is operatively connected to the driving group 3 and is adapted to actuate, in a synchronized manner with respect to each other, the driving group 3 in order to move the elongated body 100 to slide along the movement path Y, and the first motor means 8 in order to rotate the rotatable support 7 around the first rotation axis R1.

Advantageously, moreover, the logic control unit is programmable in order to select the advancing speed of the elongated body 100 moved by the driving group 3. In particular, such advancing speed is advantageously comprised between 0 and 1 meter per minute. In particular, the logic control unit is programmed for selecting a specific advancing speed of the elongated body 100 based on the rotation speed of the rotatable support 7, in order to select a particular type of machining to be executed on the elongated body 100.

More in detail, by selecting a movement speed of the elongated body 100 substantially lower than the rotation speed of the rotatable support 7, it is possible to execute a machining, preferably uniform, of the entire external surface of the elongated body 100, since the diamond-finishing milling cutter 5 is susceptible of executing a complete rotation around the first rotation axis R1 before the elongated body 100 is moved along the movement path Y.

Otherwise, with the increase of the movement speed of the elongated body 100 with respect to the rotation speed of the rotatable support 7, there corresponds a machining of the external surface of the elongated body 100 that is increasingly localized, which is substantially shaped "threadlike" around the external surface of the elongated body 100 itself.

In accordance with the preferred embodiment of the machine 1 illustrated in the enclosed figures, the machine 1 comprises two driving groups 3, between which the operating group 4 is interposed. More in detail, the machine 1 preferably comprises a first driving group 3', mounted on the support body 2 along the movement path Y upstream with respect to the operating group 4, and a second driving group 3" mounted on the support body 2 along the movement path Y downstream with respect to the operating group 4.

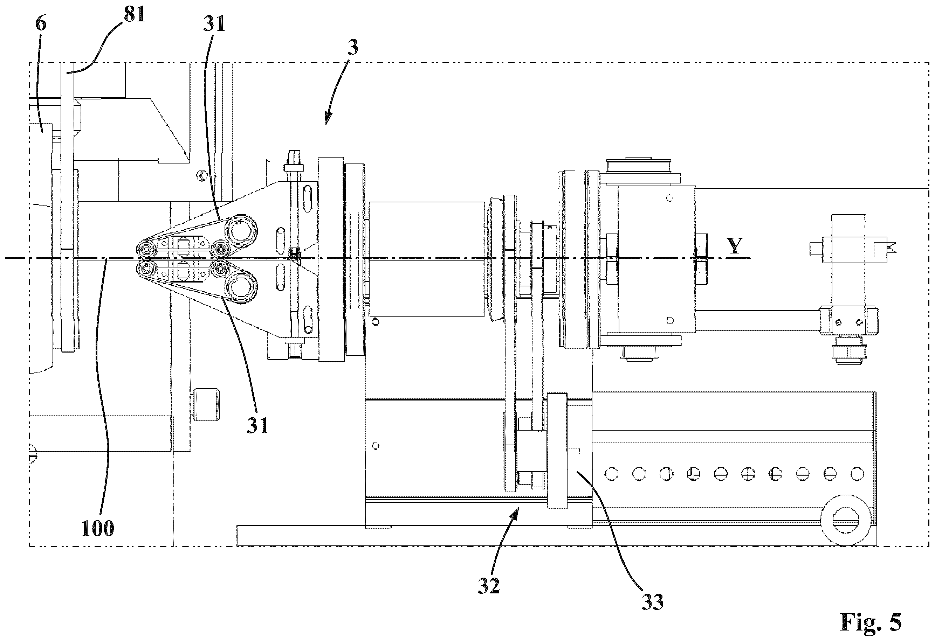

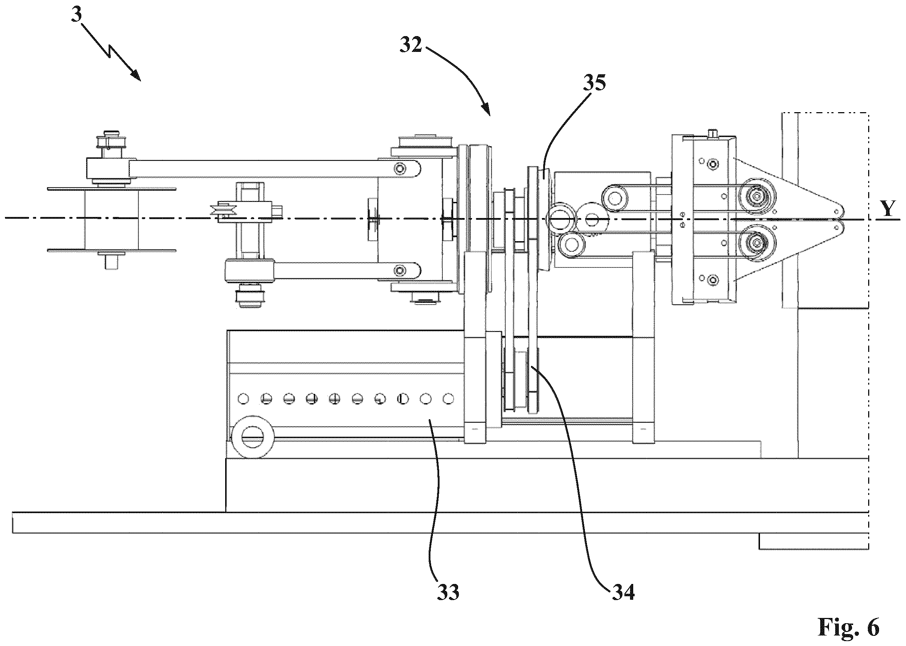

Each of the aforesaid first and second driving groups 3', 3" preferably comprises at least one movement member 31 (illustrated in the example of figure 5) arranged for advancing the elongated body 100 along the movement direction Y. In particular, such movement member 31 preferably comprises a rotary member, such as a belt or a roller. More preferably, each driving group 3 comprises two movement members 31, counterrotating with respect to each other and between which the elongated body 100 is susceptible of being placed in order to be driven along the operating path Y. Advantageously, moreover, each driving group 3 comprises fourth motor means 32 (illustrated in the enclosed figure 6) arranged for rotating the movement members 31 of the corresponding driving group 3. In particular, the aforesaid fourth motor means 32 preferably comprise a fourth motor 33, preferably electric, in particular of brushless type, and at least one transmission element adapted to transmit the motion from the fourth motor 33 to each rotary member 31. In particular, such transmission element preferably comprises a fourth transmission belt 34 mounted as a ring around the drive shaft of the fourth motor 33 and around a transmission wheel 35, which is arranged in a manner such to transmit the rotation of the fourth transmission belt 34 to each rotary member 31 in order to move the elongated body 100.

Advantageously, the fourth motor 33 of brushless type allows varying the advancing speed of the elongated body 100 along the movement path Y as desired, so as to synchronize such advancing speed with the rotation speed of the rotatable support 7.

In addition, the fourth motor 33 of brushless type advantageously also allows reversing the advancing sense of the elongated body 100 along the movement path Y. In such a manner, it is therefore possible to execute cross machining of the elongated body 100, which during a first machining advances in a first sense and during a second machining advances in a second sense opposite the aforesaid first sense.

From the above-reported description, it is therefore clear that the present machine 1 is capable of executing innumerable diamond-finishing machining operations on a same elongated body 100 or on elongated bodies 100 that are different from each other, by simply varying the settings of the motor means thereof.

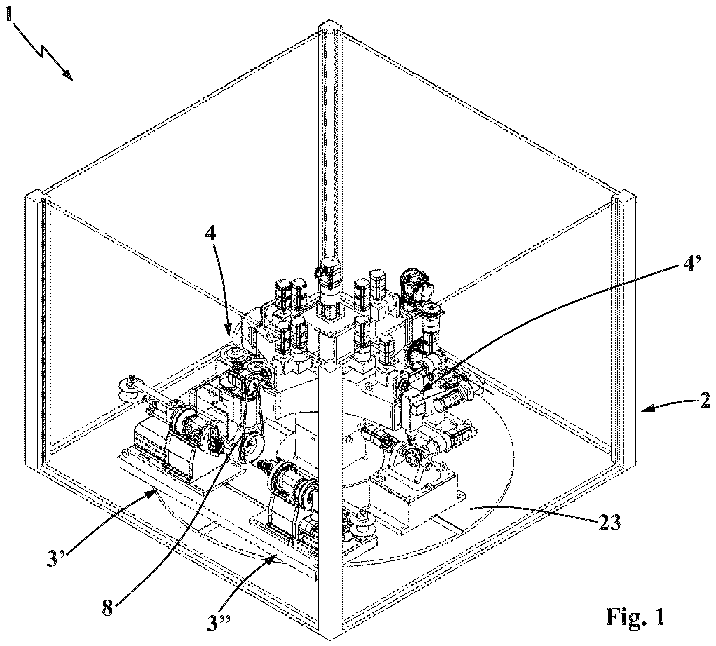

Preferably, moreover, by connecting the logic control unit to all the motor means of the machine 1, it is possible to automatically adjust the entire operation of the machine 1. It is however still possible to connect the control unit only to several of the motor means of the machine 1 so as to automate only several of the above-described adjustments. Advantageously, moreover, as is illustrated in the enclosed figure 1, the support body 2 can support further operating heads 4', also made in a different manner than the operating head 4 described above, for example in order to make diamond-finishing operations on non-elongated bodies, which will not be described in detail hereinbelow since they are already known to the man skilled in the art of machine tools.

The invention thus conceived therefore attains the pre-established objects.

## Claims

1. Machine (1) for diamond-finishing elongated bodies, which comprises:
- a support structure (2);
- at least one driving group (3), mechanically supported by said support structure (2) and adapted to move an elongated body (100) to be diamond-finished along a movement path (Y);
- at least one operating group (4), mechanically supported by said support structure (2), placed to intercept said movement path (Y) and provided with at least one diamond-finishing milling cutter (5) adapted to operate on the elongated body (100);
wherein said operating group (4) comprises:
- a support body (6) mechanically connected to said support structure (2);
- a rotatable support (7), which is rotatably connected to said support body (6) around a first rotation axis (R1) and is provided with a through hole (71), which is crossed by said movement path (Y) and has an axis (X) substantially parallel to said first rotation axis (R1); wherein said diamond-finishing milling cutter (5) is mounted on said rotatable support (7) and projects inside said through hole (71) towards said axis (X);
- first motor means (8) mechanically connected to said rotatable support (7) and arranged for rotating said rotatable support (7) around said first rotation axis (R1);
wherein said support body (6) is provided with a housing opening extended in a through manner parallel to the axis (X) of the through hole (71) of said rotatable support (7); wherein said rotatable support (7) has substantially annular shape and is mounted, in a rotatable manner, within the housing opening of said support body (6);
said machine (1) being **characterized in that** said rotatable support (7) is provided with an inner annular surface, which is extended around said axis (X), perimetrically delimiting said through hole (71);
wherein said diamond-finishing milling cutter (5) is mounted on the inner annular surface of said rotatable support (7), projectingly extended from said inner annular surface within said through hole (71).

2. Machine (1) according to claim 1, **characterized in that** said diamond-finishing milling cutter (5) comprises a milling head (51), which is mounted on said rotatable support (7), is extended within said through hole (71) along a first extension direction (Z1) that is radial with respect to said axis (X), and is adapted to act on the surface of said elongated body (100);
said operating group (4) also comprising an abutment element (9), which is mounted on said rotatable support (7) in a position diametrically opposite said milling head (51) with respect to said axis (X), and is extended within said through hole (71) in order to receive said elongated body (100) in abutment.

3. Machine (1) according to claim 2, **characterized in that** said abutment element (9) comprises an abutment wheel (91), which is rotatable in an idle manner around a revolution axis (W) orthogonal to the axis (X) of said through hole (71) and to the first extension direction (Z1) of said milling head (51), and is provided with an annular external face placed around said revolution axis (W) and susceptible of receiving said elongated body (100) in abutment.

4. Machine (1) according to claim 2 or 3, **characterized in that** said milling head (51) comprises:
- a first base body (52) supported by said rotatable support (7);
- a rotary tool (53) rotatably mounted on said first base body (52) around an operating axis that is radial with respect to said first rotation axis (R1);
- a motor member mechanically connected to said rotary tool (53) and arranged for actuating said rotary tool (53) to rotate around said operating axis.

5. Machine (1) according to any one of the preceding claims, **characterized in that** said operating group (4) comprises:
- a support arm (41) connected to said support structure (2), on which said support body (6) is rotatably mounted around a second rotation axis (R2) orthogonal to said first rotation axis (R1);
- second motor means (10) mechanically connected to said support body (6) and arranged for rotating said support body (6) around said second rotation axis (R2).

6. Machine (1) according to any one of the preceding claims, **characterized in that** said support structure (2) comprises a support frame (21) provided with a guide (22) extended according to a translation direction (T1) orthogonal to said first rotation axis (R1), to which guide (22) said support arm (41) is slidably connected;
wherein said operating group (4) comprises third motor means (11) mechanically connected to said support arm (41) and arranged for moving said support arm (41) along said translation direction (T1).

7. Machine (1) according to any one of the preceding claims, **characterized in that** it comprises a logic control unit, which is operatively connected to the first motor means (8) of said operating group (4) and is adapted to actuate, in an automated manner, said first motor means (8) in order to rotate said rotatable support (7) around said first rotation axis (R1).

8. Machine (1) according to claim 7, **characterized in that** said logic control unit is operatively connected to said driving group (3) and is adapted to actuate, in a synchronized manner, said driving group (3) in order to move said elongated body (100) to slide along said movement path (Y), and said first motor means (8) in order to rotate said rotatable support (7) around said first rotation axis (R1).

## Patentansprüche

1. Maschine (1) zur Endbearbeitung mit einem Diamanten von länglichen Körpern, die Folgendes umfasst:
- eine tragende Struktur (2);
- mindestens eine Zugeinheit (3), die mechanisch von der genannten tragenden Struktur (2) getragen wird und die dazu dient, einen länglichen Körper (100) zu bearbeiten, der entlang eines Bearbeitungswegs (Y) einer Endbearbeitung mit einem Diamanten unterzogen werden muss;
- mindestens eine Betriebseinheit (4), die mechanisch durch die genannte tragende Struktur (2) getragen wird, mit dem genannten Bearbeitungsweg (Y) verbunden ist und mindestens mit einer Diamantfräse (5) ausgestattet ist, die dazu dient, den länglichen Körper (100) zu bearbeiten;
wobei die genannte Betriebseinheit (4) Folgendes umfasst:
- einen mit der genannten tragenden Struktur (2) mechanisch verbundenen Stützkörper (6);
- eine drehbare Halterung (7), die drehbar mit dem genannten Stützkörper (6) um eine erste Drehachse (R1) verbunden und mit einer Durchgangsöffnung (71) ausgestattet ist, die vom genannten Bearbeitungsweg (Y) überquert wird und eine zur genannten ersten Drehachse (R1) im Wesentlichen parallele Achse (X) hat; wobei die genannte Diamantfräse (5) auf der genannten drehbaren Halterung (7) montiert ist und innen aus der genannten Durchgangsöffnung (71) in Richtung der genannten Achse (X) vorsteht;
- erste Antriebsmittel (8), die mechanisch mit der genannten drehbaren Halterung (7) verbunden und eingerichtet sind, um die genannte drehbare Halterung (7) um die genannte erste Drehachse (R1) in Drehung zu versetzen;
wobei der genannte Stützkörper (6) mit einer Aufnahmeöffnung ausgestattet ist, die parallel durchgehend zur Achse (X) der Durchgangsöffnung (71) der genannten drehbaren Halterung (7) verläuft;
wobei die genannte drehbare Halterung (7) eine im Wesentlichen ringförmige Form hat und drehbar innen in der Aufnahmeöffnung des genannten Stützkörpers (6) montiert ist; wobei die genannte Maschine (1) **dadurch gekennzeichnet ist, dass** die genannte drehbare Halterung (7) mit einer ringförmigen Innenfläche ausgestattet ist, die um die genannte Achse (X) verläuft und die genannte Durchgangsöffnung (71) umlaufend begrenzt;
wobei die genannte Diamantfräse (5) auf der ringförmigen Innenfläche der genannten drehbaren Halterung (7) montiert ist und vorstehend aus der genannten ringförmigen Innenfläche in der genannten Durchgangsöffnung (71) verläuft.

2. Maschine (1) nach Anspruch 1, **dadurch gekennzeichnet, dass** die genannte Diamantfräse (5) einen Fräskopf (51) umfasst, der auf der genannten drehbaren Halterung (7) montiert ist, in der genannten Durchgangsöffnung (71) entlang einer ersten radialen Verlaufsrichtung (Z1) gegenüber der genannten Achse (X) verläuft und dazu dient, auf die Oberfläche des genannten länglichen Körpers (100) einzuwirken; wobei die genannte Betriebseinheit (4) außerdem ein Anschlagelement (9) umfasst, das auf der genannten drehbaren Halterung (7) in einer diametral entgegengesetzten Position zum genannten Fräskopf (51) gegenüber der genannten Achse (X) montiert ist und in der genannten Durchgangsöffnung (71) verläuft, um aufliegend den genannten länglichen Körper (100) zu erhalten.

3. Maschine (1) nach Anspruch 2, **dadurch gekennzeichnet, dass** das genannte Anschlagelement (9) ein Anschlagrad (91) umfasst, das sich lose um eine Rotationsachse (W) dreht, die orthogonal zur Achse (X) der genannten Durchgangsöffnung (71) und zur ersten Verlaufsrichtung (Z1) des genannten Fräskopfes (51) ist, und die mit einer ringförmigen Außenfläche ausgestattet ist, die um die genannte Rotationsachse (W) angeordnet ist und die geeignet ist, aufliegend den genannten länglichen Körper (100) zu erhalten.

4. Maschine (1) nach Anspruch 2 oder 3, **dadurch gekennzeichnet, dass** der genannte Fräskopf (51) Folgendes umfasst:
- einen ersten Grundkörper (52), der von der genannten drehbaren Halterung (7) getragen wird;
- ein rotierendes Werkzeug (53), das drehbar auf dem genannten ersten Grundkörper (52) um eine radiale Betriebsachse gegenüber der genannten ersten Drehachse (R1) montiert ist;
- ein Motororgan, das mechanisch mit dem genannten rotierenden Werkzeug (53) verbunden und eingerichtet ist, um das genannte rotierende Werkzeug (53) um die genannte Betriebsachse in Drehung zu versetzen.

5. Maschine (1) nach einem beliebigen der vorangegangenen Ansprüche, **dadurch gekennzeichnet, dass** die genannte Betriebseinheit (4) Folgendes umfasst:
- einen Stützarm (41), der mit der genannten tragenden Struktur (2) verbunden ist, auf der der genannte Stützkörper (6) drehbar um eine zweite Drehachse (R2) montiert ist, die orthogonal zur genannten ersten Drehachse (R1) ist;
- zweite Antriebsmittel (10), die mechanisch mit dem genannten Stützkörper (6) verbunden und eingerichtet sind, um den genannten Stützkörper (6) um die genannte zweite Drehachse (R2) zu drehen.

6. Maschine (1) nach einem beliebigen der vorangegangenen Ansprüche, **dadurch gekennzeichnet, dass** die genannte tragende Struktur (2) einen Tragrahmen (21) umfasst, der mit einer Führung (22) versehen ist, die gemäß einer Verschiebungsrichtung (T1) verläuft, die orthogonal zur ersten Drehachse (R1) ist, mit deren Führung (22) der genannte Stützarm (41) verschiebbar verbunden ist;
wobei die genannte Betriebseinheit (4) dritte Antriebsmittel (11) umfasst, die mechanisch mit dem genannten Stützarm (41) verbunden und eingerichtet sind, um den genannten Stützarm (41) entlang der genannten Verschiebungsrichtung (T1) zu verschieben.

7. Maschine (1) nach einem beliebigen der vorangegangenen Ansprüche, **dadurch gekennzeichnet, dass** sie ein logisches Steuergerät umfasst, das operativ mit den ersten Antriebsmitteln (8) der genannten Betriebseinheit (4) verbunden ist und dazu dient, automatisch die genannten ersten Antriebsmittel (8) zu aktivieren, um die genannte drehbare Halterung (7) um die genannte erste Drehachse (R1) in Drehung zu versetzen.

8. Maschine (1) nach Anspruch 7, **dadurch gekennzeichnet, dass** das genannte logische Steuergerät operativ mit der genannten Zugeinheit (3) verbunden ist und dazu dient, synchronisiert die genannte Zugeinheit (3) zu aktivieren, um den genannten länglichen Körper (100) dazu zu bewegen, entlang des genannten Bearbeitungswegs (Y) zu gleiten, und die genannten Antriebsmittel (8), um die genannte drehbare Halterung (7) um die genannte erste Drehachse (R1) in Drehung zu versetzen.

## Revendications

1. Machine (1) pour le diamantage de corps allongés, qui comprend :
- une structure de support (2) ;
- au moins un ensemble d'attelage (3), supporté mécaniquement par ladite structure de support (2) et apte à déplacer un corps allongé (100) devant être diamanté le long d'un parcours de mouvement (Y) ;
- au moins un ensemble opérationnel (4), supporté mécaniquement par ladite structure de support (2), placé pour intercepter ledit parcours de mouvement (Y) et muni d'au moins une fraise diamantée (5) apte à fonctionner sur le corps allongé (100) ;
dans laquelle ledit ensemble opérationnel (4) comprend :
- un corps de soutien (6) relié mécaniquement à ladite structure de support (2) ;
- un support pivotant (7), qui est relié de manière pivotante audit corps de soutien (6) autour d'un premier axe de rotation (R1) et est muni d'un trou de passage (71), qui est traversé par ledit parcours de mouvement (Y) et qui a un axe (X) sensiblement parallèle audit premier axe de rotation (R1) ; dans laquelle ladite fraise diamantée (5) est montée sur ledit support pivotant (7) et fait saillie à l'intérieur dudit trou de passage (71) vers ledit axe (X) ;
- des premiers moyens moteurs (8) reliés mécaniquement audit support pivotant (7) et prédisposés pour faire pivoter ledit support pivotant (7) autour dudit premier axe de rotation (R1) ;
dans laquelle ledit corps de soutien (6) est muni d'une ouverture de logement s'étendant de manière débouchante parallèlement à l'axe (X) du trou de passage (71) dudit support pivotant (7) ;
dans laquelle ledit support pivotant (7) est en forme sensiblement annulaire et est monté, de manière pivotante, à l'intérieur de l'ouverture de logement dudit corps de soutien (6) ;
ladite machine (1) étant **caractérisée en ce que** ledit support pivotant (7) est muni d'une surface annulaire intérieure, qui se développe autour dudit axe (X) délimitant de façon périphérique ledit trou de passage (71) ;
dans laquelle ladite fraise diamantée (5) est montée sur la surface annulaire intérieure dudit support pivotant (7) se développant en porte à faux par rapport à ladite surface annulaire intérieure à l'intérieur dudit trou de passage (71).

2. Machine (1) selon la revendication 1, **caractérisée en ce que** ladite fraise diamantée (5) comprend une tête de fraisage (51), qui est montée sur ledit support pivotant (7), se développe à l'intérieur dudit trou de passage (71) le long d'une première direction de développement (Z1) radiale par rapport audit axe (X), et est apte à agir sur la surface dudit corps allongé (100) ;
ledit ensemble opérationnel (4) comprenant en outre un élément d'appui (9), qui est monté sur ledit support pivotant (7) dans une position diamétralement opposée à ladite tête de fraisage (51) par rapport audit axe (X), et se développe à l'intérieur dudit trou de passage (71) pour recevoir en appui ledit corps allongé (100).

3. Machine (1) selon la revendication 2, **caractérisée en ce que** ledit élément d'appui (9) comprend une roue d'appui (91) qui est pivotante au point mort autour d'un axe de révolution (W) orthogonal à l'axe (X) dudit trou de passage (71) et à la première direction de développement (Z1) de ladite tête de fraisage (51), et elle est munie d'une face extérieure annulaire disposée autour dudit axe de révolution (W) et susceptible de recevoir en appui ledit corps allongé (100).

4. Machine (1) selon la revendication 2 ou 3, **caractérisée en ce que** ladite tête de fraisage (51) comprend :
- un premier corps de base (52) supporté par ledit support pivotant (7) ;
- un outil rotatif (53) monté de manière pivotante sur ledit premier corps de base (52) autour d'un axe opérationnel radial par rapport audit premier axe de rotation (R1) ;
- un organe moteur relié mécaniquement audit outil rotatif (53) et prédisposé pour actionner ledit outil rotatif (53) pour qu'il pivote autour dudit axe opérationnel.

5. Machine (1) selon l'une quelconque des revendications précédentes, **caractérisé en ce que** ledit ensemble opérationnel (4) comprend :
- un bras de soutien (41) relié à ladite structure de support (2) sur lequel ledit corps de soutien (6) est monté de manière pivotante autour d'un second axe de rotation (R2) orthogonal audit premier axe de rotation (R1) ;
- des seconds moyens moteurs (10) reliés mécaniquement audit corps de soutien (6) et prédisposés pour faire pivoter ledit corps de soutien (6) autour dudit second axe de rotation (R2).

6. Machine (1) selon l'une quelconque des revendications précédentes, **caractérisée en ce que** ladite structure de support (2) comprend un châssis de support (21) pourvu d'un guide (22) se développant selon une direction de translation (T1) orthogonale audit premier axe de rotation (R1), guide (22) qui est relié de manière coulissante audit bras de soutien (41) ;
dans laquelle ledit ensemble opérationnel (4) comprend des troisièmes moyens moteurs (11) reliés mécaniquement audit bras de soutien (41) et prédisposés pour faire déplacer ledit bras de soutien (41) le long de ladite direction de translation (T1).

7. Machine (1) selon l'une quelconque des revendications précédentes, **caractérisée en ce qu'**elle comprend une unité de contrôle logique, qui est reliée fonctionnellement aux premiers moyens moteurs (8) dudit ensemble opérationnel (4) et elle est apte à actionner, de manière automatisée, lesdits premiers moyens moteurs (8) pour faire pivoter ledit support pivotant (7) autour dudit premier axe de rotation (R1).

8. Machine (1) selon la revendication 7, **caractérisée en ce que** ladite unité de contrôle logique est reliée fonctionnellement audit ensemble d'attelage (3) et est apte à actionner, de manière synchronisée, ledit ensemble d'attelage (3) pour déplacer ledit corps allongé (100) pour qu'il coulisse le long dudit parcours de mouvement (Y), et lesdits premiers moyens moteurs (8) pour faire pivoter ledit support pivotant (7) autour dudit premier axe de rotation (R1).
